# EUROPEAN PATENT APPLICATION

(11) **EP 1 827 041 A1**
(43) Date of publication of application: **29.08.2007**
(21) Application number: 05805954.4
(22) Date of filing: 09.11.2005
(51) Int. Cl.: H04Q 7/38, H04L 12/56, H04L 29/08

(54) **MOBILE COMMUNICATION SYSTEM, WIRELESS LINE CONTROL STATION, MOBILE STATION, AND WIRELESS BASE STATION**

(30) Priority: 09.11.2004 JP 2004325179; 05.01.2005 JP 2005001021
(71) Applicant: NTT DoCoMo Inc., Chiyoda-Ku Tokyo 100-6150 (JP)
(72) Inventor: USUDA, Masafumi, NTT DoCoMo, Inc., Int. Property Dpt, Chiyoda-ku, Tokyo 100-6150 (JP); UMESH, Anil, NTT DoCoMo, Inc., Int. Property Dpt, Chiyoda-ku, Tokyo 100-6150 (JP); NAKAMURA, Takehiro, NTT DoCoMo, Inc., Int. Property Dpt, Chiyoda-ku, Tokyo 100-6150 (JP)
(74) Representative: HOFFMANN EITLE
(86) International application number: PCT/JP2005/020552
(87) International publication number: WO 2006/051823

(57) **Abstract**

In a mobile communication system according to the present invention, based on a transmission acknowledgement signal transmitted from a data receiving-side apparatus, a data transmitting-side apparatus is configured to retransmit a transmission data block by using a data channel and a control channel, and the data receiving-side apparatus is configured to apply a soft combining to the retransmitted transmission data block- The data transmitting-side apparatus is configured in such a way that the number of retransmissions of the transmission data block can be set to 0.

## Description

### [Technical Field]

The present invention relates to a mobile communication system, in which, based on a transmission acknowledgement signal transmitted from a data receiving-side apparatus, a data transmitting-side apparatus is configured to retransmit a transmission data block by using a data channel and a control channel, and in which the data receiving-side apparatus is configured to apply a soft combining to the retransmitted transmission data block; and to a radio network controller, a mobile station and a radio base station that are used in such mobile communication system.

### [Background Art]

In a conventional mobile communication system, there is a problem of an increase of reception errors that results from large deterioration in the quality of uplink signals received by a radio base station and the quality of downlink signals received by a mobile station, because a received signal level in a data receiving-side apparatus instantaneously varies due to multi-path fading and the like.

As a technique for overcoming the aforementioned problem, there is known a hybrid ARQ (Auto Repeat reQuest and hereinafter referred to as HARQ).

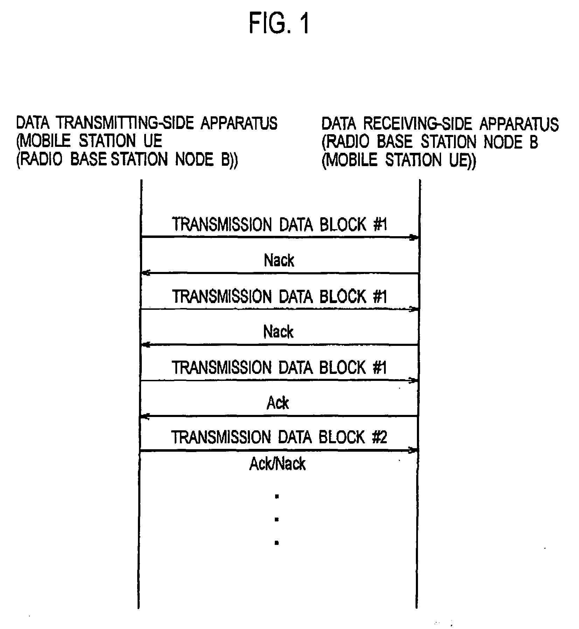

As illustrated in Fig. 1, in the HARQ, a data receiving-side apparatus (a radio base station Node B or a mobile station UE) transmits a transmission acknowledgement signal (Ack or Nack) to a data transmitting-side apparatus (a mobile station UE or a radio base station Node B) in response to a received transmission data block.

In general, only when receiving a transmission acknowledgement signal (Ack) indicating that a transmission data block (for example, a transmission data block #1) has been correctly received, the data transmitting-side apparatus is configured to transmit a next transmission data block (for example, a transmission data block #2).

On the other hand, when receiving a transmission acknowledgement signal (Nack) indicating that a transmission data block has not been correctly received, the data transmitting-side apparatus is configured to transmit the transmission data block again.

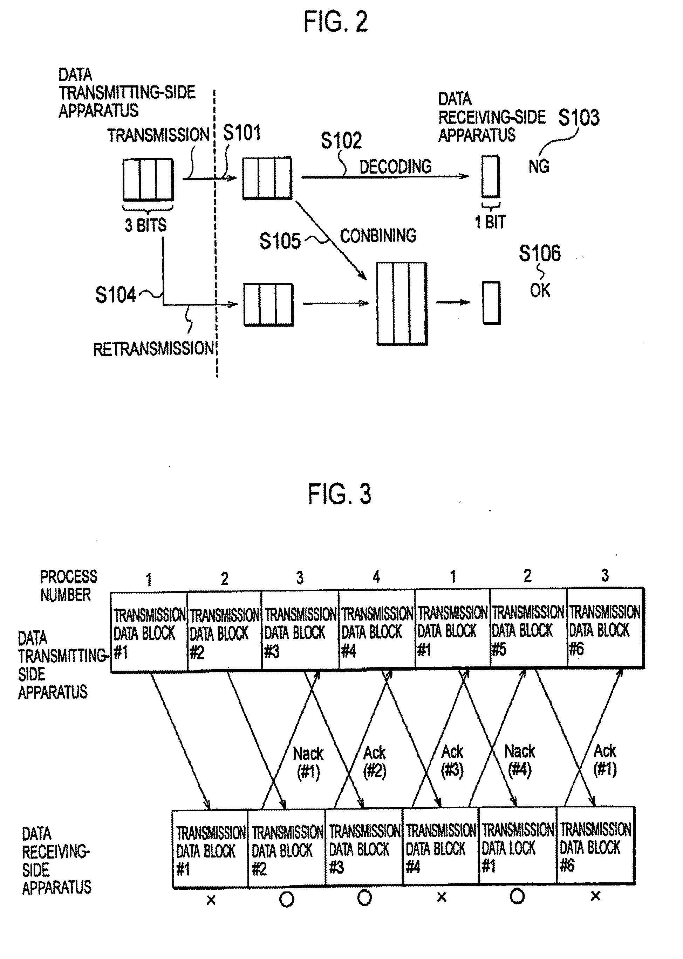

Furthermore, in the HARQ, a soft combining can be performed as shown in Fig. 2. Referring to Fig. 2, an operation principle of the soft combining is briefly described.

In step S101, the data transmitting-side apparatus transmits 3-bit transmission data block. In step S102, the data receiving-side apparatus performs a decoding processing on a received transmission data block. At this time, it is assumed that the data receiving-side apparatus has detected a receiving error (refer to step S103). Here, the data receiving-side apparatus stores 3 bit forming the transmission data block, in which the receiving error has been detected, in a retransmission control memory as a soft decision bit.

In step S104, the data transmitting-side apparatus retransmits the 3-bit transmission data block., In step S105, the data receiving-side apparatus adds the soft decision bits stored in the transmission control memory and the received 3-bit transmission data block, so that a ratio of signal power to noise power is increased. Consequently, the data receiving-side apparatus succeeds in receiving the transmission data block without detecting a receiving error (refer to step S106).

Moreover, in the HARQ, the efficiency in use of a radio link can be improved by transmitting the next transmission data block and subsequent transmission data blocks until a transmission acknowledgement signal is returned. As a simple method for performing the above, the Stop and Wait is known. Referring to Fig. 3, an operation principle of the Stop and Wait including four processes will be briefly described.

As shown in Fig. 3, after the data transmitting-side apparatus has transmitted a transmission data block, time lag occurs until the data transmitting-side apparatus receives a transmission acknowledgement signal of the transmission data block. In an example of Fig. 3, since such time lag is not fewer than twice the transmission time of a transmission data block nor more than three times the transmission time thereof, timing at which the transmission data block is retransmitted is that after three transmission data blocks are transmitted.

In this case, as shown in Fig. 3, it is possible to assume that four sets of the HARQ operate in parallel, which is referred to as the Stop and Wait including four processes.

The number N of the HARQ operating in parallel is determined according to the transmission time of the transmission data block, the time lag before the receipt of a transmission acknowledgement signal, processing delay in the data transmitting-side apparatus, the data receiving-side apparatus, and the like, so that it is referred as an N Process Stop and Wait.
[Non-Patent Document 1] "W-CDMA Mobile Communication System", edited by Keiji Tachikawa, Maruzen,Co., Ltd.
[Non-Patent Document 2] 3GPP TR25.896 v6.0.0

The HARQ is excellent in the point that a transmission data block can be transmitted to the data receiving-side apparatus with high confidence level. However, it has a disadvantage that a transmission acknowledgement signal (Ack or Nack) is transmitted over a radio link in the opposite direction (a downlink is used when transmitting the transmission data block over an uplink, and the uplink is used when transmitting the transmission data block over the downlink), which results in an increase in load on the radio link in the opposite direction.

Accordingly, an influence on the mobile communication system caused by the load on the radio link in the opposite direction depends on the congestion degree of the radio link in the opposite direction.

Specifically, when the congestion degree of the radio link in the opposite direction is small, the influence on the mobile communication system caused by the load on the radio link in the opposite direction is small. However, when the congestion degree of the radio link in the opposite direction is large, there is a problem that the influence on the mobile communication system caused by the load on the radio link in the opposite direction becomes large.

### [Disclosure of the Invention]

Accordingly, the present invention has been made in consideration of the aforementioned problems and aims to provide a mobile communication system, a radio network controller, a mobile station, and a radio base station capable of improving a radio capacity when a retransmission control on a transmission data block is performed.

A first aspect of the present invention is summarized as a mobile communication system, in which based on a transmission acknowledgement signal transmitted from a data receiving-side apparatus, a data transmitting-side apparatus is configured to retransmit a transmission data block by using a data channel and a control channel, and the data receiving-side apparatus is configured to apply a soft combining to the retransmitted transmission data block, wherein the data transmitting-side apparatus is configured in such a way that the number of retransmissions of the transmission data block can be set to 0.

In the first aspect of the present invention, the data transmitting-side apparatus can be configured to set the number of retransmissions of the transmission data block to 0, when the congestion degree of a downlink is greater than a predetermined threshold.

In the first aspect of the present invention, the data receiving-side apparatus can be configured not to transmit the transmission acknowledgement signal, when the number of retransmissions of the transmission data block is set to 0.

In the first aspect of the present invention, when the number of retransmissions of the transmission data block is set to 0, the data receiving-side apparatus can be configured not to apply the soft combining by deleting the received transmission data block without storing the received transmission data block in a retransmission control memory.

A second aspect of the present invention is summarized as a radio network controller used in a mobile communication system, in which based on a transmission acknowledgement signal transmitted from a radio base station, a mobile station is configured to retransmit a transmission data block by using a data channel and a control channel, and in which the radio base station is configured to apply a soft combining to the retransmitted transmission data block, including: an instruction unit configured to instruct the mobile station to set the number of retransmissions of the transmission data block to 0.

A third aspect of the present invention is summarized as a radio network controller used in a mobile communication system, in which, based on a transmission acknowledgement signal transmitted from a mobile station, a radio base station is configured to retransmit a transmission data block by using a data channel and a control channel, and in which the mobile station is configured to apply a soft combining to the retransmitted transmission data block, including: an instruction unit configured to instruct the radio base station to set the number of retransmissions of the transmission data block to 0.

In the second or third aspect of the present invention, when the congestion degree of a downlink is greater than a predetermined threshold, the instruction unit can be configured to instruct the number of retransmissions of the transmission data block to be set 0.

A fourth aspect of the present invention is summarized as a mobile station used in a mobile communication system, in which, according to a transmission acknowledgement signal transmitted from a radio base station, the mobile station is configured to retransmit a transmission data block by using a data channel and a control channel, and in which the radio base station is configured to apply a soft combining to the retransmitted transmission data block, wherein: the mobile station is configured in such a ways that the number of retransmissions of the transmission data block can be set to 0.

In the fourth aspect of the present invention, the mobile station can be configured to set the number of retransmissions of the transmission data block to 0, when the congestion degree of a downlink is greater than a predetermined threshold.

In the fourth aspect of the present invention, the mobile station can be configured not to receive the transmission acknowledgement signal transmitted from the radio base station, when the number of retransmissions of the transmission data block is set to 0.

A fifth aspect of the present invention is summarized as a radio base station used in a mobile communication system, in which, based on a transmission acknowledgement signal transmitted from a mobile station, the radio base station is configured to retransmit a transmission data block by using a data channel and a control channel, and in which the mobile station is configured to apply a soft combining to the retransmitted transmission data block, wherein: the radio base station is configured in such a way that the number of retransmissions of the transmission data block can be set to 0.

In the fifth aspect of the present invention, the radio base station can be configured to set the number of retransmissions of the transmission data block to 0, when the congestion degree of a downlink is greater than a predetermined threshold.

In the fifth aspect of the present invention, the radio base station can be configured not to receive the transmission acknowledgement signal transmitted from the mobile station, when the number of retransmissions of the transmission data block is set to 0.

A sixth aspect of the present invention is summarized as a radio base station used in a mobile communication system, in which, based on a transmission acknowledgement signal transmitted from a radio base station, a mobile station is configured to retransmit a transmission data block by using a data channel and a control channel, and in which the radio base station is configured to apply a soft combining to the retransmitted transmission data block, wherein: the radio base station is configured not to apply a soft combining by deleting the received transmission data block without storing the received transmission data block in a retransmission control memory, when the number of retransmissions of the transmission data block is set to 0.

A seventh aspect of the present invention is summarized as a mobile station used in a mobile communication system, in which, based on a transmission acknowledgement signal transmitted from a mobile station, the radio base station is configured to retransmit a transmission data block by using a data channel and a control channel, and in which the mobile station is configured to apply a soft combining to the retransmitted transmission data block, wherein: the mobile station is configured not to apply a soft combining by deleting the received transmission data block without storing the received transmission data block in a retransmission control memory, when the number of retransmissions of the transmission data block is set to 0.

### [Brief Descriptions of the Drawings]

[Fig. 1] Fig. 1 is a sequence diagram showing an operation of retransmission control processing in a conventional mobile communication system.
[Fig. 2] Fig. 2 is a view for illustrating a soft combining in the conventional mobile communication system.
[Fig. 3] Fig. 3 is a view for illustrating the Stop and Wait in the conventional mobile communication system.
[Fig. 4] Fig. 4 is a general configuration diagram in a mobile communication system according to an embodiment of the present invention;
[Fig. 5] Fig. 5 is a functional block diagram of a radio base station in the mobile communication system according to an embodiment of the present invention.
[Fig. 6] Fig. 6 is a functional block diagram of a baseband signal processor unit of the radio base station in the mobile communication system according to an embodiment of the present invention.
[Fig. 7] Fig. 7 is a functional block diagram of MAC-e and a layer 1 processor unit (configuration for an uplink) of the baseband signal processor unit of the radio base station in the mobile communication system according to an embodiment of the present invention.
[Fig. 8] Fig. 8 is a functional block diagram of a MAC-e function unit of the MAC-e and layer 1 processor unit (configuration for an uplink) of the baseband signal processor unit of the radio base station in the mobile communication system according to an embodiment of the present invention. [Fig. 9] Fig. 9 is a functional block diagram of a mobile station in the mobile communication system according to an embodiment of the present invention.
[Fig. 10] Fig. 10 is a functional block diagram of a baseband signal processor unit of the mobile station in the mobile communication system according to an embodiment of the present invention.
[Fig. 11] Fig. 11 is a functional block diagram of a MAC-e processor unit of the baseband signal processor unit of the mobile station in the mobile communication system according to an embodiment of the present invention.
[Fig. 12] Fig. 12 is a functional block diagram of a layer 1 processor unit of the baseband signal processor unit of the mobile station in the mobile communication system according to an embodiment of the present invention.
[Fig. 13] Fig. 13 is a functional block diagram of a radio network controller in the mobile communication system according to an embodiment of the present invention.
[Fig. 14] Fig. 14 is a sequence diagram showing an operation of the mobile communication system according to an embodiment of the present invention.

### [Best Modes for Carrying out the Invention]

### (Configuration of mobile communication system according to the first embodiment of the present invention)

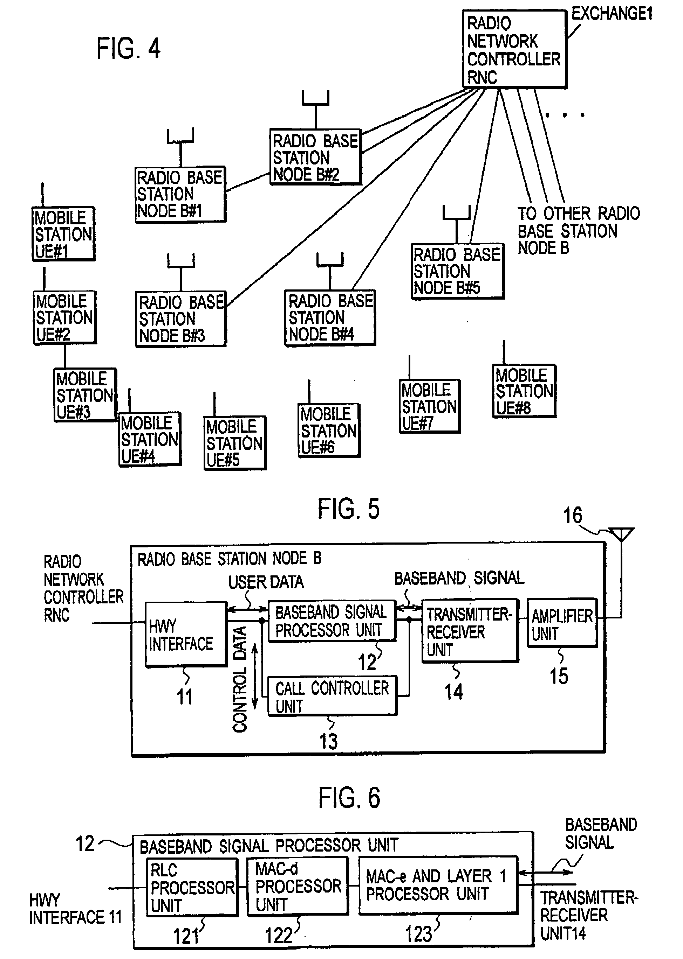

Descriptions will be given of the configuration of the mobile communication system according to the first embodiment of the present invention with reference to Figs. 4 to 13. As shown in Fig. 4, the mobile communication system of this embodiment includes a plurality of mobile stations UE#1 to #8, a plurality of radio base stations Node B#1 to #5, and a radio network controller RNC.

In the mobile communication system according to this embodiment, a data transmitting-side apparatus (a mobile station UE or a radio base station Node B) is configured to retransmit a transmission data block by using a data channel and a control channel, in response to a transmission acknowledgement signal (Ack or Nack) transmitted from a data receiving-side apparatus (a radio base station Node B or a mobile station UE).

Furthermore, the mobile communication system according to this embodiment, the data receiving-side apparatus (a radio base station Node B or a mobile station UE) is configured to apply a soft combining to the transmission data block retransmitted by the data transmitting-side apparatus (a mobile station UE or a radio base station Node B).

The present invention can be applied to the mobile communication in an uplink (mobile communication in which the data transmitting-side apparatus is a mobile station UE, and in which the data receiving-side apparatus is a radio base station Node B) and the mobile communication in a downlink (mobile communication in which the data transmitting-side apparatus is a radio base station Node B, and in which the data transmitting-side apparatus is a mobile station UE).

Note that even in the case where the present invention is applied to either mobile communication, since the data transmitting-side apparatus and the data receiving-side apparatus have the same configuration, descriptions will be given of the case where the present invention is applied to the mobile communication in the uplink in which the data transmitting-side apparatus is the mobile station UE, and in which the data receiving-side apparatus is the radio base station Node B, in this embodiment.

Moreover, in the mobile communication system according to this embodiment, the "HSDPA" is used in the downlink, and the "EUL (Enhanced Uplink)" is used in the uplink. It should be noted that the retransmission control using the HARQ is performed in both the "HSDPA" and the "EUL."

Accordingly, in the uplink, used are an enhanced dedicated physical channel (E-DPCH) having an enhanced dedicated physical data channel (E-DPDCH) and an enhanced dedicated physical control channel (E-DPCCH), and a dedicated physical channel (DPCH) having a dedicated physical data channel (DPDCH) and a dedicated physical control channel (DPCCH).

Here, the enhanced dedicated physical control channel (E-DPCCH) transmits control data for EUL such as a transmission format number for defining a transmission format of E-DPDCH (transmission block size, etc.), information on HARQ (the number of retransmissions, etc.) and information on scheduling (transmission power and buffered data amount and the like in the mobile station UE).

Moreover, the enhanced dedicated physical data channel (E-DPDCH) is associated with the enhanced dedicated physical control channel (E-DPCCH), and transmits user data for the mobile station UE according to the control data for EUL transmitted through the enhanced dedicated physical control channel (E-DPCCH).

The dedicated physical control channel (DPCCH) transmits control data such as a pilot symbol used in a RAKE combining, the SIR measurement, and the like, a TFCI (Transport Format Combination Indicator) for identifying the transmission format of an uplink dedicated physical data channel (DPDCH), and a transmission power control bit for a downlink and the like.

Furthermore, the dedicated physical data channel (DPDCH) is associated with the dedicated physical control channel (DPCCH), and transmits user data for the mobile station UE according to the control data transmitted through the dedicated physical control channel (DPCCH). Note that in the case where user data that should be transmitted does not exist in the mobile station UE, the dedicated physical data channel (DPDCH) may be configured not to be transmitted.

Still furthermore, in the uplink, a high speed dedicated physical control channel (HS-DPCCH), which is required when the HSPDA is employed, and a random access channel (RACH) are also used.

The high speed dedicated physical control channel (HS-DPCCH) transmits a CPICH quality indicator (CQI) and a transmission acknowledgement signal (Ack or Nack) for the high speed dedicated physical data channel.

Note that descriptions in this embodiment will be given of the enhanced dedicated physical channel (E-DPCH), assuming that the present invention is applied to the E-DPCH configured to perform retransmission control using the HARQ.

As shown in Fig. 5, the radio base station Node B according to this embodiment includes a HWY interface 11, a baseband signal processor unit 12, a call controller unit 13, at least one transmitter-receiver unit 14, at least one amplifier unit 15, and at least one transmitter-receiver antenna 16.

The HWY interface 11 is an interface with a radio network controller RNC. More specifically, the HWY interface 11 is configured to receive, from the radio network controller RNC, user data to be transmitted to a mobile station UE via a downlink, and to input the user data to the baseband signal processor unit 12. Moreover, the HWY interface 11 is configured to receive control data for the radio base station Node B from the radio network controller RNC, and to input the control data to the call controller unit 13.

Furthermore, the HWY interface 11 is configured to acquire, from the baseband signal processor unit 12, user data included in uplink signals which are received from the mobile station UE via an uplink, and to transmit the user data to the radio network controller RNC. In addition, the HWY interface 11 is configured to acquire control data for the radio network controller RNC from the call controller unit 13, and to transmit the control data to the radio network controller RNC.

The baseband signal processor unit 12 is configured to generate baseband signals by performing a MAC layer processing and a layer 1 processing on the user data acquired from the HWY interface 11, and to forward the generated baseband signals to the transmitter-receiver unit 14.

Here, the MAC layer processing in the downlink includes a scheduling processing, a transmission rate control processing, and the like. Moreover, the layer-1 processing in the downlink includes a channel coding processing and, a spreading processing for user data, and the like.

Additionally, the baseband signal processor unit 12 is configured to extract user data by performing the MAC layer processing and the layer-1 processing on the baseband signals acquired from the transmitter-receiver unit 14, and to forward the extracted user data to the HWY interface 11.

Here, the MAC layer processing in the uplink includes a MAC control processing, a header disposal processing, and the like. Furthermore, the layer-1 processing in the downlink includes a despreading processing, a RAKE combining processing, an error correction decoding processing, and the like.

Note that specific functions of the baseband signal processor unit 12 will be described later. Furthermore, the call controller unit 13 is that for performing a call control processing according to the control data acquired from the HWY interface 11.

The transmitter-receiver unit 14 is configured to perform processing for converting the baseband signals, which are acquired from the baseband signal processor unit 12, into the radio frequency band signals (downlink signals), and to transmit the radio frequency signals to the amplifier unit 15. Moreover, the transmitter-receiver unit 14 is configured to perform processing for converting the radio frequency band signals (uplink signals), which are acquired from the amplifier unit 15, into the baseband signals, and to transmit the baseband signals to the baseband signal processor unit 12.

The amplifier unit 15 is configured to amplify the downlink signals acquired from the transmitter-receiver unit 14, and to transmit the amplified downlink signals to the mobile station UE via the transmitter-receiver antenna 16. Furthermore, the amplifier unit 15 is configured to amplify the uplink signals received by the transmitter-receiver antenna 16, and to transmit the amplified uplink signals to the transmitter-receiver unit 14.

As shown in Fig. 6, the baseband signal processor unit 12 includes a RLC processor unit 121, a MAC-d processor unit 122, a MAC-e and layer 1 processor unit 123.

The MAC-e and layer 1 processor unit 123 is configured to perform a despreading processing, a RAKE combining processing, a HARQ processing, and the like, on the baseband signal acquired from the transmitter-receiver unit 14.

The MAC-d processor unit 122 is configured to perform a disposal processing of the header, or the like, on an output signal from the MAC-e and layer 1 processor unit 123.

The RLC processor unit 121 is configured to perform a retransmission control processing of an RLC layer, a reassembly process of an RLC-SDU, and the like, on the MAC-d processor unit 122.

However, it should be noted that these functions are not clearly classified with hardware, so that they may be realized by software.

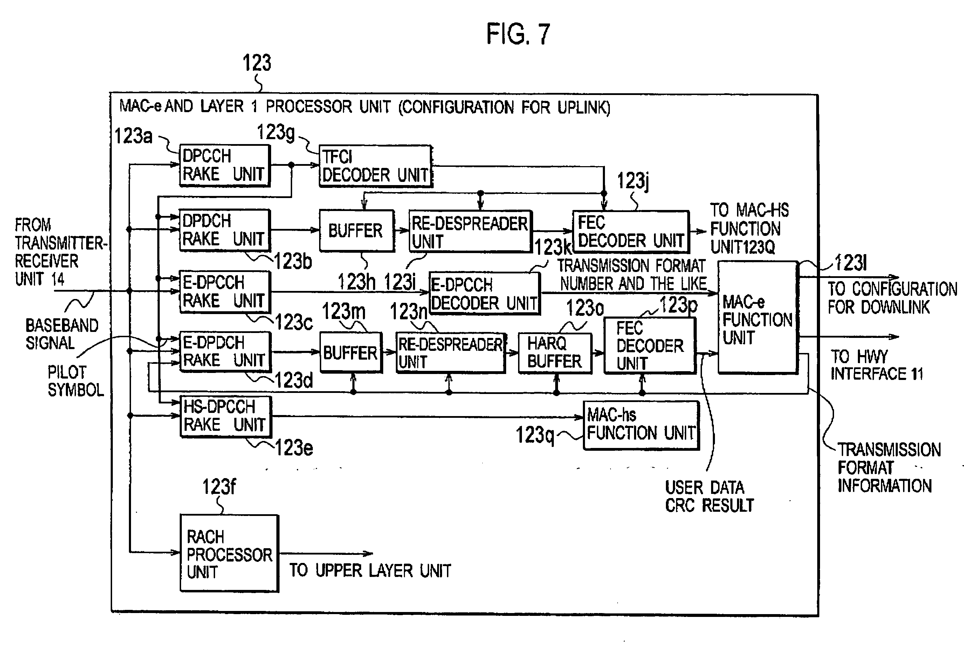

As shown in Fig. 7, the MAC-e and layer 1 processor unit (configuration for uplink) 123 includes: a DPCCH RAKE unit 123a; a DPDCH RAKE unit 123b; an E-DPCCH RAKE unit 123c; an E-DPDCH RAKE unit 123d; an HS-DPCCH RAKE unit 123e; an RACH processor unit 123f; a TFCI decoder unit 123g; buffers 123h and 123m; re-despreader units 123i and 123n; FEC decoder units 123j and 123p; an E-DPCCH decoder unit 123k; a MAC-e function unit 1231; a HARQ buffer 1230; and a MAC-hs function unit 123q.

The E-DPCCH RAKE unit 123c is configured to perform, on the enhanced dedicated physical control channel (E-DPCCH) in the baseband signals transmitted from the transmitter-receiver unit 14, the despreading processing and the RAKE combining processing using a pilot symbol included in the dedicated physical control channel (DPCCH).

The E-DPCCH decoder 123k is configured to acquire the transmission format number, the information on HARQ, the information on scheduling, and the like, by performing a decoding processing on the RAKE combining outputs of the E-DPCCH RAKE unit 123c, and to input the information to the MAC-e function unit 1231.

The E-DPDCH RAKE unit 123d is configured to perform, on the enhanced dedicated physical data channel (E-DPDCH) in the base band signals transmitted from the transmitter-receiver unit 14, the despreading processing using the transmission format information (number of codes) transmitted from the MAC-e function unit 1231 and the RAKE combining processing using the pilot symbol included in the dedicated physical control channel (DPCCH).

The buffer 123m is configured to store the RAKE combining outputs of the E-DPDCH RAKE unit 123d, according to the transmission format information (number of symbols) transmitted from the MAC-e function unit 1231.

The re-despreader unit 123n is configured to perform a despreading processing on the RAKE combining outputs of the E-DPDCH RAKE unit 123d stored in the buffer 123m, according to transmission format information (a spreading ratio) transmitted from the MAC-e function unit 1231.

The HARQ buffer 1230 is configured to store despreading processing outputs of the re-despreader unit 123n, according to the transmission format information transmitted from the MAC-e function unit 1231.

The FEC decoder unit 123p is configured to perform the error correction decoding processing (an FEC decoding processing) on the outputs of the despreading processing by the re-despreader unit 123n stored in the HARQ buffer 123o, according to the transmission format information (transmission data block size) transmitted from the MAC-e function unit 1231.

The MAC-e function unit 1231 is configured to derive and output transmission format information (the number of codes, the number of symbols, a spreading ratio, a transmission data block size, and the like), according to the transmission format number, the information on HARQ, and the information on scheduling, and the like, which are acquired from the E-DPCCH decoder unit 123k.

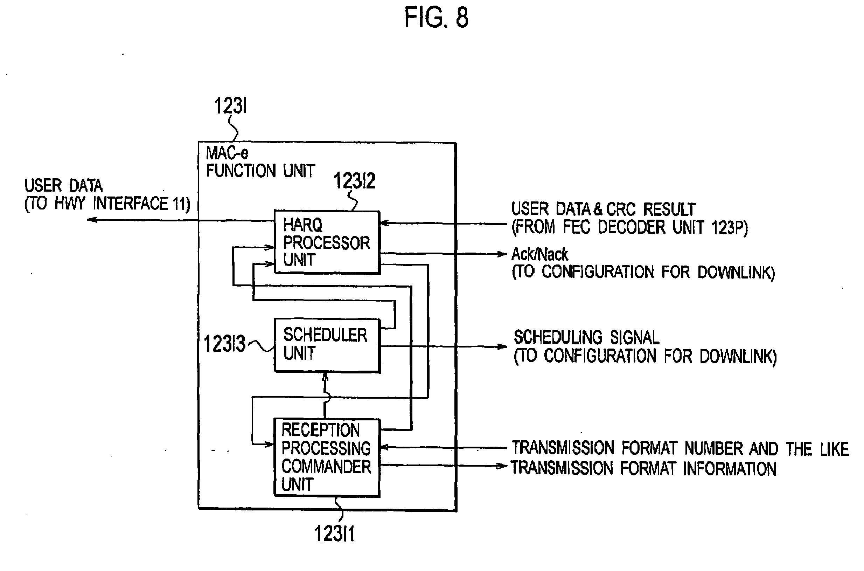

Furthermore, as shown in Fig. 8, the MAC-e function unit 1231 includes a reception processing commander unit 12311, a HARQ processor unit 12312, and a scheduler unit 12313.

The reception processing commander unit 12311 is configured to transmit, to the HARQ processor unit 12312, the transmission format number, the information on HARQ, and the information on the scheduling inputted from the E-DPCCH decoder unit 123k, as well as the user data and a CRC result inputted from the FEC decoder unit 123p.

Moreover, the reception processing commander unit 12311 is configured to transmit, to the scheduler unit 12313, the information on scheduling inputted from the E-DPCCH decoder unit 123k.

Additionally, the reception processing commander unit 12311 is configured to output transmission format information corresponding to the transmission format number inputted from the E-DPCCH decoder unit 123k.

The HARQ processor unit 12312 determines whether or not a receiving processing on user data is successful, in response to the CRC result inputted from the FEC decoder unit 123p. In addition, the HARQ processor unit 12312 generates a transmission acknowledgement signal (Ack or Nack) in response to the determined result, and transmits the transmission acknowledgement signal to configuration for the downlink of the baseband signal processor unit 12. Furthermore, when the above determined result is OK, the HARQ processor unit 12312 transmits the user data inputted from the FEC decoder unit 123p to the radio network controller RNC.

Moreover, the HARQ processor unit 12312 may be configured not to transmit a transmission acknowledgement signal (Ack/Nack) to the mobile station UE, when informed, by the radio network controller RNC or by the mobile station UE, that the number of retransmissions of a transmission data block in a mobile station UE is set to 0.

Furthermore, the HARQ processor unit 12312 may be configured not to transmit a transmission acknowledgement signal (Ack/Nack), predicting in advance that the number of retransmissions of a transmission data block in the mobile station UE is set to 0, when the congestion degree in a downlink is greater than a predetermined threshold, or when radio quality in a downlink is lower than a predetermined threshold.

The HARQ processor unit 12312 is configured to perform the above-described soft combining on the transmission data block received via the uplink (refer to Fig. 2).

More specifically, the HARQ processor unit 12312 stores a bit in a retransmission control memory as a soft decision bit, the bit composing a transmission data block in which a receiving error is detected. Then, the HARQ processor unit 12312 adds a soft decision bit stored in the retransmission control memory and a bit composing the retransmitted transmission data block to thereby increase a ratio of signal power to noise power, so that a chance of success in receiving transmission data blocks is improved.

Note that, when the number of retransmissions of a received transmission data block is set to 0, the HARQ processor unit 12312 is configured not to apply the soft combining by deleting the received transmission data block without storing the received transmission data block in the retransmission control memory.

In addition, when the number of retransmissions of received transmission data block reaches the maximum number of retransmissions, the HARQ processor unit 12312 may be configured not to apply the soft combining as well by deleting the received transmission data block without storing the received transmission data block in the retransmission control memory.

The scheduler unit 12313 decides whether or not transmission should be performed at each mobile station UE, and decides a transmission rate (a transmission data block size, or a transmission power ratio of a data channel to a control channel) at each mobile station, the maximum allowable transmission power (the maximum allowable transmission power of E-DPCCH and E-DPDCH) at each mobile station UE, or the like, and then transmits the determined results to the configuration for a downlink of the baseband signal processor unit 12, according to the information of the received scheduling and the like.

Note that the scheduler unit 12313 may be configured to decide the transmission rate at each mobile station UE, according to the congestion degree of the uplink, the radio quality, and the like. Moreover, the scheduler unit 12313 may be configured to set an upper limit for the maximum allowable transmission power, according to the transmission capability of a mobile station.

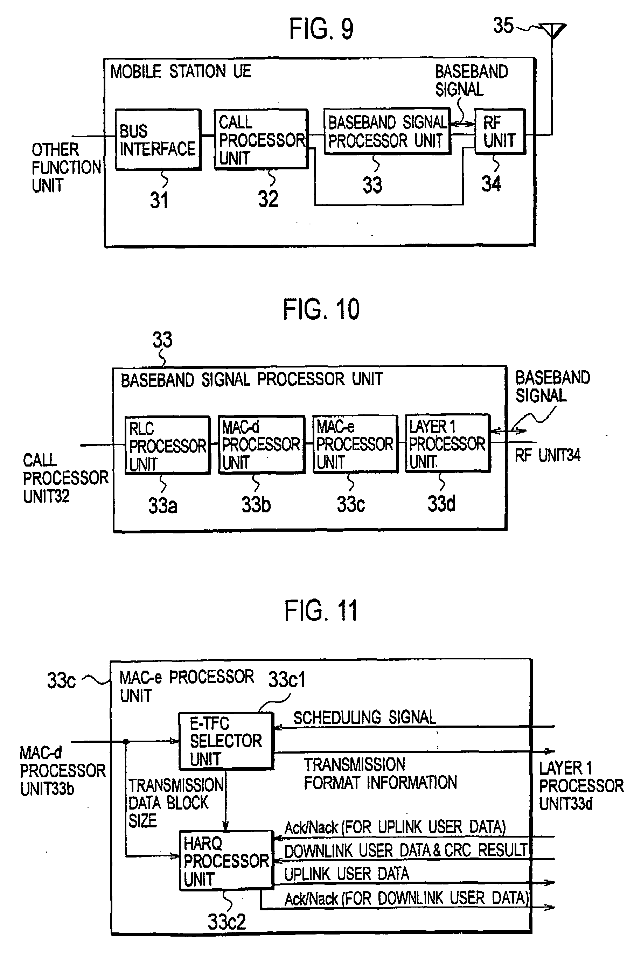

As shown in Fig. 9, the mobile station UE according to this embodiment includes a path interface 31, a call processor unit 32, a base band processor unit 33, a RF unit 34, and a transmitter-receiver antenna 36.

However, such functions may exist independently as hardware, and may be partly or entirely integrated, or may be configured through a process of software.

The bus interface 31 is configured to forward the user data outputted from the call processor unit 32, to another function unit (for example, an application related function unit). Furthermore, the bus interface 31 is configured to forward the user data transmitted from another function unit (for example, the application related function unit), to the call processor unit 32.

The call processor unit 32 is configured to perform the call control processing for transmitting and receiving the user data.

The baseband signal processor unit 33 is configured to transmit, to the call processor unit 32, the user data acquired in a way that the baseband signals transmitted from the RF unit 34 is subjected to: the layer-1 processing including the despreading processing, the RAKE combining processing and the FEC decoding processing; the MAC processing including the MAC-e processing and the MAC-d processing; and the RLC processing.

Moreover, the baseband signal processor unit 33 is configured to generate baseband signals by performing the RLC processing, the MAC processing, or the layer-1 processing, on the user data transmitted from the call processor unit 32, and to transmit the baseband signals to the RF unit 34.

Note that the detailed functions of the baseband signal processor unit 33 will be described later. The RF unit 34 is configured to generate baseband signals by performing detection processing, a filtering processing, a quantization processing, and the like, on radio frequency signals received through the transmitter-receiver antenna 35, and to transmit the baseband signals to the baseband signal processor unit 33. Furthermore, the RF unit 34 is configured to convert the baseband signals transmitted from the baseband signal processor unit 33, into the radio frequency signals.

As shown in Fig. 10, the baseband signal processor unit 33 includes a RLC processor unit 33a, a MAC-d processor unit 33b, a MAC-e processor unit 33c, and a layer 1 processor unit 33d.

The RLC processor unit 33a is configured to perform a processing in an upper layer of a layer-2 on the user data transmitted from the call processor unit 32, and to transmit the processed user data to the MAC-d processor unit 33b.

The MAC-d processor unit 33b is configured to grant a channel identifier header, and to create a transmission format in the uplink according to the limitation of transmission power in the uplink.

As shown in Fig. 11, the MAC-e processor unit 33c includes an E-TFC selector unit 33c1, and a HARQ processor unit 33c2.

The E-TFC selector unit 33c1 is configured to determine transmission formats (E-TFC) of the enhanced dedicated physical data channel (E-DPDCH) and the enhanced dedicated physical control channel (E-DPCCH), according to the scheduling signals transmitted from the radio base station Node B.

Furthermore, the E-TFC selector unit, 33c1 transmits transmission format information (transmission data block size, a transmission power ratio of an enhanced dedicated physical data channel (E-DPDCH) and an enhanced dedicated physical control channel (E-DPCCH), and the like) on the determined transmission formats to the layer 1 processor unit 33d, and at the same time, transmits the determined transmission data block size or transmission power ratio to the HARQ processor unit 33c2.

Here, the scheduling signals may be those designating the transmission data block size, or those designating the transmission power ratio of the enhanced dedicated physical data channel (E-DPDCH) to the enhanced dedicated physical control channel (E-DPCCH), or may be those simply indicating UP/DOWN.

The HARQ processor unit 33c2 is configured to perform process management of the N process Stop and Wait, and to perform transmission of uplink user data according to a transmission acknowledgement signal (Ack/Nack for up data) received from a radio base station Node B.

Furthermore, when a Nack is received, and when the number of retransmissions of a specific transmission data block (user data) is less than the maximum number of retransmissions, the HARQ processor unit 33c2 retransmits the transmission data block. When an Ack is received, or when the number of retransmissions of a specific transmission data block (user data) reaches the maximum number of retransmissions, the HARQ processor unit 33c2 transmits the next transmission data block.

Still furthermore, the HARQ processor unit 33c2 determines whether or not a receiving processing of downlink user data is successful, according to a CRC result inputted through the layer 1 processor unit 33d. Then, the HARQ processor unit 33c2, generates a transmission acknowledgement signal (Ack/Nack for downlink user data) according to such a determined result, and transmits the generated transmission acknowledgement signal to the layer 1 processor unit 33d. In addition, when the above determined result is OK, the HARQ processor unit 33c2 transmits downlink user data inputted through the layer 1 processor unit 33d, to the MAC-d processor unit 33d.

Still yet furthermore, the HARQ processor unit 33c2 is configured to be capable of setting the number of retransmissions of a transmission data block to 0. In addition, in the above case, the HARQ processor unit 33c2 is configured not to retransmit a transmission block.

For example, when the congestion degree of a downlink is greater than a predetermined threshold, the HARQ processor unit 33c2 may be configured to set the number of retransmissions of the transmission data block to 0. When the maximum number of retransmissions notified from the radio network controller RNC is 0, the HARQ processor unit 33c2 may be configured to set the number of retransmissions of the transmission data block to 0.

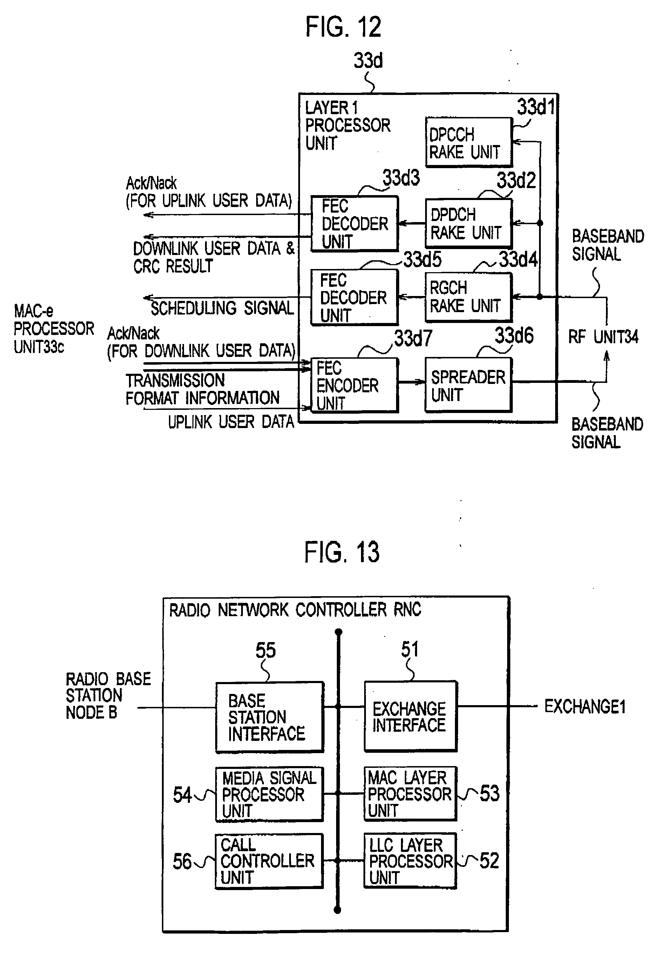

As shown in Fig. 12, the layer 1 processor unit 33d includes a DPCCH RAKE unit 33d1, a DPDCH RAKE unit 33d2, a RGCH RAKE unit 33d4, a spreader unit 33d6, an FEC encoder unit 33d7, and FEC decoder units 33d3 and 33d5.

The DPDCH RAKE unit 33d2 is configured to perform the despreading processing and the RAKE combining processing, on the dedicated physical data channel (DPDCH) in the downlink signals transmitted from the RF unit 34, and to output the processed DPDCH to the FEC decoder unit 33d3.

The FEC decoder unit 33d3 is configured to perform the FEC decoding processing on the RAKE combining outputs of the DPDCH RAKE unit 33d2, and to extract the downlink user data so as to be transmitted to the MAC-e processor unit 33c. Note that the FEC decoder unit 33d3 is configured to apply the soft combining, when performing the FEC decoding processing.

Moreover, the FEC decoder unit 33d3 is configured to transmit a CRC result performed on the downlink user data to the MAC-e processor unit 33c.

The RGCH RAKE unit 33d4 is configured to perform a despreading processing and a RAKE combining processing on a rate grant channel (RGCH: Relative Grant Channel), in the downlink signal transmitted from the RF unit 34, and to output the processed RGCH to the FEC decoder unit 33d5.

The FEC decoder unit 33d5 is configured to perform the FEC decoding processing on the RAKE combining outputs of the RGCH RAKE unit 33d4, and to extract scheduling signals so as to be transmitted to the MAC-e processor unit 33c. Note that the scheduling signals include the maximum allowable transmission rate in the uplink (the transmission data block size, or the transmission power ratio of the enhanced dedicated physical data channel (E-DPDCH) to the enhanced dedicated physical control channel (E-DPCCH)) and the like.

The FEC encoder unit 33d7 is configured to perform the FEC encoding processing on the user data transmitted from the MAC-e processor unit 33c, by using the transmission format information transmitted from the MAC-e processor unit 33c, in according to the transmission acknowledgement signal transmitted from the MAC-e processor unit 33c (Ack/Nack for downlink user data), and to transmit the processed user data to the spreader unit 33d6.

The spreader unit 33d6 is configured to perform the spreading processing on the uplink user data transmitted from the FEC encoder unit 33d7, and to transmit the processed uplink user data to the RF unit 34.

The radio network controller RNC according to this embodiment is an apparatus located in an upper level of the radio base station Node B, and is configured to control radio communications between the radio base station Node B and the mobile station UE.

As shown in Fig. 13, the radio network controller RNC according to this embodiment includes an exchange interface 51, an LLC layer processor unit 52 , a MAC layer processor unit 53, a media signal processor unit 54, a base station interface 55, and a call controller unit 56.

The exchange interface 51 is an interface with an exchange 1. The exchange interface 51 is configured to forward the downlink signals transmitted from the exchange 1, to the LLC layer processor unit 52, and to forward the uplink signals transmitted from the LLC layer processor unit 52, to the exchange 1.

The LLC layer processor unit 52 is configured to perform a LLC (Logical Link Control) sub-layer processing such as a combining processing of a header such as a sequence number or a trailer. The LLC layer processor unit 52 is configured to transmit the uplink signals to the exchange interface 51, and to transmit the downlink signals to the MAC layer processor unit 53, after the LLC sub-layer processing is performed.

The MAC layer processor unit 53 is configured to perform the MAC layer processing such as a priority control processing, a header attachment processing and the like. The MAC layer processor unit 53 is configured to transmit the uplink signals to the LLC layer processor unit 52, and to transmit the downlink signals to the radio base station interface 55 (or the media signal processor unit 54), after the MAC layer processing is performed.

The media signal processor unit 54 is configured to perform a media signal processing on voice signals or real time image signals . The media signal processor unit 54 is configured to transmit the uplink signals to the MAC layer processor unit 53, and to transmit the downlink signals to the radio base station interface 55, after the media signal processing is performed.

The base station interface 55 is an interface with the radio base station Node B. The base station interface 55 is configured to forward the uplink signals transmitted from the radio base station Node B, to the MAC layer processor unit 53 (or to the media signal processor unit 54), and to forward the downlink signals transmitted from the MAC layer processor unit 53 (or from the media signal processor unit 54), to the radio base station Node B.

The call controller unit 56 is configured to perform a call reception control processing, a channel setup and a release processing by layer-3 signaling and the like.

Furthermore, the call controller unit 56 is configured to notify a mobile station UE of the maximum number of retransmission of a transmission data block.

To be more precise, when the congestion degree of a downlink is greater than a predetermined threshold, or when radio quality in a downlink is lower than a predetermined threshold, the call controller unit 56 instructs the mobile station UE to set the (maximum) number of retransmission of the transmission data block to 0.

Furthermore, the call controller unit 56 may be configured to notify the radio base station Node B of the maximum number of retransmission of a transmission data block.

Still furthermore, the call controller unit 56 may be configured to determine the different maximum number of retransmissions for each of a transmission data block.

### (Operations of mobile communication system according to the first embodiment of the present invention)

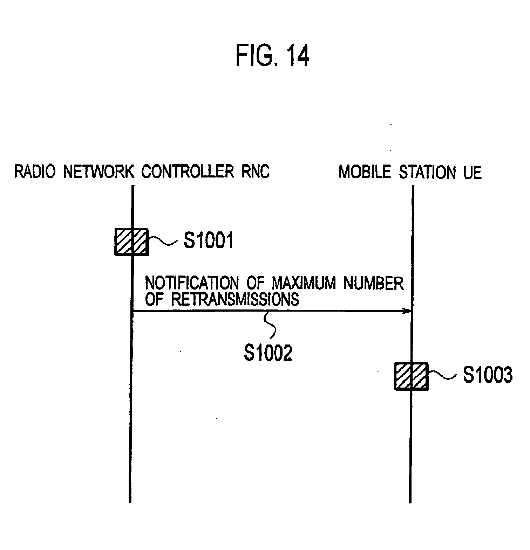

An operation of a mobile communication system according to the first embodiment of the present invention will be described with reference to Fig. 14.

As shown in Fig. 14, in step S101, the call controller unit 56 of the radio network controller RNC determines the maximum number of retransmissions of a transmission data block in the mobile station UE, according to the congestion degree of a downlink between the mobile station UE (data transmitting-side apparatus) and the radio base station Node B (data receiving-side apparatus).

In step S102, the call controller unit 56 of the radio network controller RNC informs the mobile station UE of the determined maximum number of retransmissions of a transmission data block in the mobile station UE.

In step S103, the HARQ processor unit 33C2, which configures the MAC-e processor unit 33C in the baseband signal processor unit 33 of the mobile station UE, performs a retransmission control processing on the transmissions of a subsequent enhanced dedicated physical control channel (E-DPCCH) and enhanced dedicated physical data channel (E-DPDCH), by using the maximum number of retransmissions. Here, when the number of retransmissions of a transmission data block is set to 0, the HARQ processor unit 33C2 does not retransmit the transmission data block.

### (Advantageous effects of mobile communication system according to the first embodiment of the present invention)

According to the mobile communication system of the first embodiment of the present invention, the maximum number of retransmissions of a transmission can be adjusted according to the congestion degree and the radio quality of a downlink, so that an influence on a radio capacity of a downlink for a transmission acknowledgement signal in the downlink can be reduced.

To be more precise, according to the mobile communication system of the first embodiment of the present invention, the maximum number of retransmissions of a transmission data block is set to 0, when the congestion degree of the downlink is greater than a predetermined threshold, or when radio quality in the downlink is lower than a predetermined threshold. In this way, the transmission of the transmission acknowledgement signal of the downlink is halted, and thereby the traffic of the downlink can be reduced when a traffic condition of the downlink is not favorable.

### [Industrial Applicability]

As described above, according to the present invention, it is possible to provide a mobile communication system, a radio network controller, a mobile station, and a radio base station capable of improving a radio capacity when a retransmission control on a transmission data block is performed.

## Claims

1. A mobile communication system, in which, based on a transmission acknowledgement signal transmitted from a data receiving-side apparatus, a data transmitting-side apparatus is configured to retransmit a transmission data block by using a data channel and a control channel, and the data receiving-side apparatus is configured to apply a soft combining to the retransmitted transmission data block, wherein
the data transmitting-side apparatus is configured in such a way that the number of retransmissions of the transmission data block can be set to 0.

2. The mobile communication system according to claim 1, wherein the data transmitting-side apparatus is configured to set the number of retransmissions of the transmission data block to 0, when the congestion degree of a downlink is greater than a predetermined threshold.

3. The mobile communication system according to claim 1 or 2, wherein the data receiving-side apparatus is configured not to transmit the transmission acknowledgement signal, when the number of retransmissions of the transmission data block is set to 0.

4. The mobile communication system according to any one of claims 1 to 3, wherein, when the number of retransmissions of the transmission data block is set to 0, the data receiving-side apparatus is configured not to apply the soft combining by deleting the received transmission data block without storing the received transmission data block in a retransmission control memory.

5. A radio network controller used in a mobile communication system, in which, based on a transmission acknowledgement signal transmitted from a radio base station, a mobile station is configured to retransmit a transmission data block by using a data channel and a control channel, and in which the radio base station is configured to apply a soft combining to the retransmitted transmission data block, comprising:
an instruction unit configured to instruct the mobile station to set the number of retransmissions of the transmission data block to 0.

6. A radio network controller used in a mobile communication system, in which, based on a transmission acknowledgement signal transmitted from a mobile station, a radio base station is configured to retransmit a transmission data block by using a data channel and a control channel, and in which the mobile station is configured to apply a soft combining to the retransmitted transmission data block, comprising:
an instruction unit configured to instruct the radio base station to set the number of retransmissions of the transmission data block to 0.

7. The radio network controller according to claim 5 or 6, wherein, when the congestion degree of a downlink is greater than a predetermined threshold, the instruction unit is configured to instruct the number of retransmissions of the transmission data block to be set 0.

8. A mobile station used in a mobile communication system, in which, according to a transmission acknowledgement signal transmitted from a radio base station, the mobile station is configured to retransmit a transmission data block by using a data channel and a control channel, and in which the radio base station is configured to apply a soft combining to the retransmitted transmission data block, wherein:
the mobile station is configured in such a way that the number of retransmissions of the transmission data block can be set to 0.

9. The mobile station according to claim 8, wherein the mobile station is configured to set the number of retransmissions of the transmission data block to 0, when the congestion degree of a downlink is greater than a predetermined threshold.

10. The mobile station according to claim 8 or 9, wherein the mobile station is configured not to receive the transmission acknowledgement signal transmitted from the radio base station, when the number of retransmissions of the transmission data block is set to 0.

11. A radio base station used in a mobile communication system, in which, based on a transmission acknowledgement signal transmitted from a mobile station, the radio base station is configured to retransmit a transmission data block by using a data channel and a control channel, and in which the mobile station is configured to apply a soft combining to the retransmitted transmission data block, wherein:
the radio base station is configured in such a way that the number of retransmissions of the transmission data block can be set to 0.

12. The radio base station according to claim 11, wherein the radio base station is configured to set the number of retransmissions of the transmission data block to 0 when the congestion degree of a downlink is greater than a predetermined threshold.

13. The radio base station according to claim 11 or 12, wherein the radio base station is configured not to receive the transmission acknowledgement signal transmitted from the mobile station, when the number of retransmissions of the transmission data block is set to 0.

14. A radio base station used in a mobile communication system, in which, based on a transmission acknowledgement signal transmitted from a radio base station, a mobile station is configured to retransmit a transmission data block by using a data channel and a control channel, and in which the radio base station is configured to apply a soft combining to the retransmitted transmission data block, wherein:
the radio base station is configured not to apply a soft combining by deleting the received transmission data block without storing the received transmission data block in a retransmission control memory, when the number of retransmissions of the transmission data block is set to 0.

15. A mobile station used in a mobile communication system, in which, based on a transmission acknowledgement signal transmitted from a mobile station, the radio base station is configured to retransmit a transmission data block by using a data channel and a control channel, and in which the mobile station is configured to apply a soft combining to the retransmitted transmission data block, wherein:
the mobile station is configured not to apply a soft combining by deleting the received transmission data block without storing the received transmission data block in a retransmission control memory, when the number of retransmissions of the transmission data block is set to 0.
